# FASCICULE DE BREVET EUROPEEN

(11) **EP 0 854 115 B1**
(45) Date de publication et mention de la délivrance du brevet: **21.06.2000**
(21) Numéro de dépôt: 98200008.5
(22) Date de dépôt: 03.01.1998
(51) Int. Cl.: C01D 1/02, C01D 7/00, C03B 5/00, C03C 1/00, G21F 9/14

(54) **Procédé d'oxydation d'au moins un métal alcalin**
Verfahren zur Oxidation von mindestens einem Alkalimetall
Process for the oxidation of at least one alkali metal

(30) Priorité: 15.01.1997 BE 9700039
(43) Date de publication de la demande: 22.07.1998
(73) Titulaire: Centre d'Etude de l'Energie Nucléaire, établissement d'utilité publique, 1160 Brussel (Oudergem) (BE)
(72) Inventeur: Rahier, André Henri Alain Joseph, 4690 Wonck (Bassenge) (BE); Van Alsenoy, Veerle Harriet Josepha, 2610 Wilrijk (Antwerpen) (BE)
(74) Mandataire: Debrabandere, René

(56) Documents cités:
- EP-A- 0 596 331
- GB-A- 253 520
- GB-A- 961 160
- US-A- 4 065 400
- US-A- 4 898 692
- CHEMICAL ABSTRACTS, vol. 98, no. 18, 2 mai 1983 Columbus, Ohio, US; abstract no. 151626, TOSHIBA CORP.: "Apparatus for treating radioactive waste sodium" XP002042220 & JP 58 021 597 A 8 février 1983
- DATABASE WPI Section Ch, Week 8609 Derwent Publications Ltd., London, GB; Class K07, AN 86-059981 XP002042221 & JP 61 013 196 A (DORYOKURO KAKUNENRYO KAIHATSU) , 21 janvier 1986

## Description

La présente invention a pour objet un procédé d'oxydation d'au moins un métal alcalin selon lequel ce métal alcalin est soumis en état fondu à une oxydation par réaction avec de l'oxygène, les oxydes ainsi formés étant soumis à une carbonatation par réaction avec du gaz carbonique.

Le métal alcalin peut être aussi bien radioactif que non radioactif.

Les métaux alcalins radioactifs sont essentiellement issus d'expériences nucléaires les ayant soit mis en contact avec des isotopes radioactifs, soit soumis à un flux neutronique tel qu'une activation en a résulté.

D'une façon générale, de grandes quantités de métaux alcalins peuvent difficilement être stockées de façon prolongée par suite de la grande réactivité que ces métaux présentent vis-à-vis de l'eau et de l'oxygène. Les dites réactions sont extrêmement violentes et engendrent des risques d'explosion par suite de la production d'hydrogène dans le cas de la réaction avec de l'eau, ou de peroxydes, dans le cas des réactions avec de l'oxygène. Des incendies que l'on ne peut pas maîtriser par des moyens classiques, l'eau étant à proscrire, peuvent aussi se produire. Le caractère très exothermique de ces réactions amplifie encore les risques d'accident par explosion ou incendie.

Or de grandes quantités de ces métaux existent, particulièrement dans le secteur nucléaire, où par exemple, le sodium liquide est utilisé en tant que fluide de refroidissement. La question du traitement sûr et efficace de ces métaux, qu'ils soient radioactifs ou non, se pose en termes aigus.

En effet, divers procédés de traitement existent mais aucun ne garantit un niveau de sécurité entièrement satisfaisant et aucun ne propose une solution parfaitement compatible avec le conditionnement nécessaire en aval du traitement, ce dernier point étant particulièrement crucial dans le cas des métaux alcalins contaminés.

Puisque l'oxydation des métaux alcalins pose de sérieux problèmes de sécurité lorsqu'on utilise un oxydant contenant de l'hydrogène comme de l'eau ou de l'alcool, ou un oxydant susceptible de subir une combustion tel que l'alcool, il est préférable de faire appel à un oxydant qui ne contient pas d'hydrogène et qui n'est pas lui-même combustible, c'est-à-dire de l'oxygène.

Un tel procédé connu est décrit dans US-A-1.685.520 et US-A-2.825.629. Ce procédé est basé sur la calcination du métal par réaction avec l'oxygène ou l'air. Il présente toutefois l'inconvénient de ne pas oxyder complètement le métal, de faibles quantités de ce dernier ne réagissant pas par suite de la protection par oxydation en surface, ce qui maintient les risques précités. La calcination présente également le risque de conduire à la formation de peroxyde réputé instable et susceptible lui aussi de provoquer des explosions.

Le traitement des métaux alcalins selon le procédé cité débouche généralement indirectement sur la production d'hydroxydes en solution aqueuse après hydratation des oxydes et peroxydes. D'ailleurs ces mêmes hydroxydes sont directement formés lorsque l'oxydation est faite avec de l'eau ou indirectement après hydrolyse de l'alcoolate dans une oxydation avec de l'alcool.

Que les métaux soient radioactifs ou non, ces hydroxydes nécessitent un traitement supplémentaire par suite de leur caractère corrosif. Cette question est particulièrement aiguë dans le cas du traitement des métaux radioactifs pour lesquels il importe de définir un conditionnement définitif ouvrant la voie à un stockage à long terme.

EP-A-0.596.331 décrit un procédé dans lequel le métal alcalin fondu est dispergé dans un courant de gaz contenant de l'oxygène et est mélangé ensuite à un gaz contenant du gaz carbonique.

Les oxydes formés sont carbonatés mais l'évacuation de la chaleur pose des problèmes. L'injection de vapeur d'eau est conseillée.

Les carbonates formés sont continuellement extraits du réacteur.

La transformation de soude en carbonate de soude par de l'oxygène et du gaz carbonique est également connu de CHEMICAL ABSTRACTS, vol. 98, no 18, 2 mai 1983, abstract no 151626 (XP 002042220) mais dans ce cas le carbonate est aussi extrait continuellement.

La présente invention a précisément pour objet un procédé d'oxydation des métaux alcalins qui permet de travailler dans des conditions de sûreté nettement supérieures, tout en garantissant une oxydation des métaux et en préparant l'étape du conditionnement.

Ce but est atteint par le fait que le métal alcalin fondu est dispersé dans un lit fluidisé, l'oxygène et le gaz carbonique étant ajoutés au lit susdit dans lequel l'oxydation et la carbonatation ont lieu.

Les oxydes et les peroxydes, au fur et à mesure qu'ils sont formés par suite de l'oxydation du métal, réagissent immédiatement avec le CO₂ pour former des carbonates, ce qui annule les risques d'explosion.

Le caractère turbulent du lit garantit que les réactions seront complètes. En effet, l'éventuelle couche d'oxyde qui pourrait protéger le métal est constamment brisée par suite des chocs fréquents que subissent les particules de métal avec celles du lit.

La fluidisation du lit est obtenue de préférence à l'aide d'un débit ascensionnel d'un gaz inerte, auquel l'oxygène et/ou le gaz carbonique est éventuellement mélangé.

Le métal peut être injecté à l'aide d'un nébuliseur sous forme de gouttelettes au sein même du lit fluidisé .

Le contrôle thermique des réactions est alors excellent.

La température dans le lit fluidisé peut être comprise entre 50 à 700 °C.

Les carbonates formés peuvent être extraits du lit en vue de leur conditionnement ou conditionnés avec au moins une partie des particules solides formant le lit.

Surtout dans ce dernier cas le lit fluidisé contient des particules solides de SiO₂ et éventuellement d'un ou plusieurs oxydes ou carbonates tels que du CaO, CaCO₃, B₂O₃, Al₂O₃, MgO, MgCO₃, BaO, ZnO, ZnCO₃, PbO, PbCO₃, Fe₂O₃, TiO₂ et ZrO₂.

Par suite des réactions mises en oeuvre, les carbonates de métal alcalin s'accumulent dans le lit, lui conférant une composition idéale pour subir une vitrification subséquente. Après réaction, le contenu du lit peut être soit vitrifié à l'intérieur même du réacteur de fluidisation soit transféré dans un autre réacteur pour y subir ladite vitrification.

Ce type de conditionnement est surtout indiqué pour des métaux alcalins radioactifs. Dans le cas des métaux alcalins non radioactifs, la vitrification ne s'avère pas indispensable et les particules du lit au début du traitement peuvent être des particules de sable.

Au terme du traitement, les carbonates peuvent aussi être extraits du réacteur par une mise en solution aqueuse. Les effluents ainsi récupérés ne présentent pas l'inconvénient d'être corrosifs tandis que la sécurité du traitement reste garantie. Le cas échéant, le mélange de sable et de carbonates peut lui-même être valorisé, surtout si le métal alcalin est du sodium.

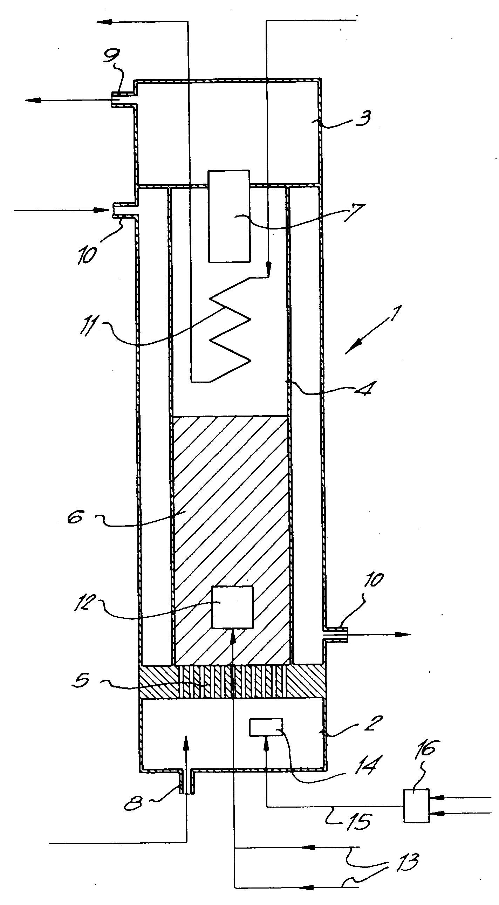

Pour plus de clarté, un exemple de réalisation d'un procédé d'oxydation d'au moins un métal alcalin selon l'invention est décrit ci-après à titre illustratif et non restrictif, référence étant faite au dessin annexé qui montre en coupe un réacteur utilisé pour réaliser le procédé selon l'invention.

Ce réacteur est un réacteur à lit fluidisé comprenant une colonne 1 verticale divisée en une section inférieure d'entrée 2, une section supérieure 3 et une section de réaction intermédiaire 4 fermée à son extrémité inférieure par un support 5 pour le lit 6 et à son extrémité supérieure par un cyclone 7.

Ce support 5 est un plateau en métal perforé ou poreux ou en céramique poreuse.

Une conduite 8 d'alimentation du gaz de fluidisation débouche dans la section inférieure 2 tandis qu'une conduite d'évacuation 9 de ce gaz sort de la section supérieure 3.

La section intermédiaire 4 est à paroi double et l'espace entre les parois fait partie d'un circuit de refroidissement 10.

Un échangeur de chaleur 11 peut être monté dans la partie supérieure de la section intermédiaire 4 de réaction.

Dans la partie inférieure de cette section de réaction 4 se trouve un nébuliseur 12 du type bi-fluide pour du métal alcalin fondu. Ce nébuliseur 12 est pourvu d'un orifice calibré interne permettant une prédispersion du métal alcalin ainsi que d'un ensemble d'orifices calibrés externes réalisant la dispersion finale. Il peut être chauffé par l'intermédiaire d'une résistance chauffante. Il est alimenté par deux conduites 13 traversant le support 5.

Dans cette partie inférieure ou dans la section inférieure 2 se trouve un injecteur 14 pour des gaz réactifs relié par une conduite 15 à un dispositif de mélange 16.

Pour oxyder selon l'invention un métal alcalin radioactif ou un mélange de métaux alcalins radioactifs à l'aide du réacteur susdit il est procédé comme suit:

La section réactionnelle 4 est remplie à peu près à mi-hauteur avec des particules d'oxyde en particulier de SiO₂ éventuellement mélangées à d'autres oxydes et/ou à des carbonates formant le lit 6.

La granulométrie des oxydes ou carbonates est généralement telle que le diamètre équivalent maximum des particules ne dépasse pas 1 mm.

En particulier, le lit 6 peut être composé selon le tableau donné ci-dessous:

| Oxydes | quantité % massique p.r.au lit | granulométrie micromètre |
|---|---|---|
| SiO₂ | de 40 à 95 | de 0 à 1000 |
| CaO | de 0 à 25 | de 0 à 500 |
| B₂0₃ | de 0 à 30 | de 0 à 500 |
| Al₂O₃ | de 0 à 25 | de 0 à 500 |
| MgO | de 0 à 20 | de 0 à 300 |
| BaO | de 0 à 10 | de 0 à 300 |
| ZnO | de 0 à 20 | de 0 à 300 |
| PbO | de 0 à 40 | de 0 à 300 |
| Fe₂O₃ | de 0 à 3 | de 0 à 300 |
| TiO₂ | de 0 à 20 | de 0 à 300 |
| ZrO₂ | de 0 à 20 | de 0 à 300 |

Le réacteur est ensuite fermé et le nébuliseur 12 est préchauffé jusqu'à une température de 50 à 200°C, après quoi il est maintenu à une température au dessus de la température de fusion du métal alcalin ou du mélange de métaux alcalins à traiter.

Ensuite du gaz inerte est amené par la conduite d'alimentation 8, forcé au travers du support 5 distribuant ce gaz et au travers du lit 6 et évacué par la conduite d'évacuation 9.

Le débit de gaz inerte, par exemple de l'azote, est compris entre 0,1 et 5000 m³/h (calculé sous des conditions de température et de pression normales) selon la capacité du traitement et suffisante pour que la fluidisation du lit 6 soit obtenue.

Les particules du lit 6 de taille supérieure à 5 micromètre sont confinées dans la section de réaction 4 par le cyclone 7.

De l'oxygène et du gaz carbonique sont mélangés. Le mélange de ces réactifs gazeux est introduit par la conduite 13 et l'injecteur 14 dans la section inférieure 2, en-dessous du support 5 où il se mélange avec le gaz inerte de fluidisation.

Puis, le métal alcalin radioactif fondu et donc liquide est injecté sous forme de gouttelettes au sein du lit 6 par le nébuliseur 12, ce qui a pour effet de provoquer une montée en température de la section de réaction 4. Une pré-dispersion a lieu à l'intérieur du nébuliseur 12. Le débit maximal de métal alcalin est de 360 kg/h.

Cette section de réaction 4 est immédiatement refroidie par un fluide caloporteur circulant au travers du circuit de refroidissement 10 et le cas échéant au travers de l'échangeur de chaleur 11 qui est surtout utile si le diamètre interne de la section de réaction dépasse 0,3 m.

Les différents débits sont ajustés de sorte que la température en régime de la section de réaction 4 soit comprise entre 50 et 700 °C.

Durant le traitement le métal alcalin est oxydé et par réaction avec le gaz carbonique, transformé en carbonate.

Le traitement est arrêté lorsque par suite des réactions la composition du lit 6 atteint la composition désirée pour l'étape suivante de conditionnement, c'est-à-dire la vitrification.

Cette composition est normalement atteinte lorsque le pourcentage en oxyde équivalent de métal alcalin atteint 10 à 45 % en masse de l'ensemble des oxydes équivalents dans le lit 6.

Le lit 6 entier est vitrifié.

A titre d'illustration, un exemple concrèt de traitement de sodium radioactif est donné ci-après.

Un débit de 360 g/h de sodium fondu est traité dans le réacteur susdit ayant une zone de réaction 4 de 2 m de haut et de 0,2 m de diamètre interne.

La composition du lit 6 avant le traitement est la suivante: 84% de SiO₂, 3% d'Al₂O₃, 8% de CaO et 5% de MgO (% en masse se rapportant à la somme des oxydes équivalents, les deux derniers oxydes étant introduits sous forme de carbonates).

Le débit de gaz inerte de fluidisation est de 0,5 m³/h ou plus.

Les débits sont ajustés de sorte que la température à l'intérieur de la section de réaction 4 soit comprise entre 200 et 350 °C. Dans ce cas la puissance thermique du réacteur est voisine de 1700 W.

Le traitement est arrêté après environ 20 heures.

Le traitement d'un ou plusieurs métaux alcalins non radioactifs se fait exactement de la même manière à ces différences près que la composition du lit 6 avant le traitement est de 100% de SiO₂, tandis que le conditionnement ne comprend pas de vitrification mais une mise en solution aqueuse des carbonates alcalins.

Le traitement peut donc se poursuivre au-delà de la limite susdite pour les métaux alcalins radioactifs.

Il est évident que de nombreuses modifications peuvent être apportées aux exemples susdécrits, sans pour autant sortir du cadre de l'invention.

En particulier, l'oxygène et/ou le gaz carbonique peuvent être mélangés au gaz de fluidisation en dehors du réacteur.

## Revendications

1. Procédé d'oxydation d'au moins un métal alcalin selon lequel ce métal alcalin est soumis en état fondu à une oxydation par réaction avec de l'oxygène, caractérisé en ce que le métal alcalin fondu est dispersé dans une lit fluidisé (6) et est soumis à une oxydation par réaction avec de dans ce lit (6), les oxydes ainsi formés l'oxygène gaz étant soumis à une carbonatation par réaction avec du carbonique ajouté au lit (6) susdit.

2. Procédé selon la revendication 1, caractérisé en ce que la fluidisation du lit (6) est obtenue à l'aide d'un débit ascensionnel d'un gaz inerte.

3. Procédé selon l'une quelconque des revendications 1 et 2, caractérisé en ce que le métal alcalin est injecté à l'aide d'un nébuliseur (12) sous forme de gouttelettes au sein même du lit fluidisé (6).

4. Procédé selon la revendication 3, caractérisé en ce qu'une pré-nébulisation du métal alcalin a lieu à l'intérieur du nébuliseur (12).

5. Procédé selon la revendication 3 ou 4, caractérisé en ce qu'avant et éventuellement au début du traitement le nébuliseur (12) est préchauffé à une température de 50 à 200 °C.

6. Procédé selon l'une quelconque des revendications précédentes, caractérisé en ce que l'oxygène et le gaz carbonique sont injectés sous forme d'un mélange dosé.

7. Procédé selon l'une quelconque des revendications précédentes, caractérisé en ce que la température dans le lit fluidisé (6) est limitée à 50 à 700 °C par refroidissement.

8. Procédé selon l'une ou l'autre des revendications précédentes, caractérisé en ce que les carbonates formés sont extraits du lit (6) en vue de leur conditionnement.

9. Procédé selon la revendication 8, caractérisé en ce que les carbonates formés sont extraits du lit (6) par mise en solution aqueuse.

10. Procédé selon l'une ou l'autre des revendications 1 à 9, caractérisé en ce que les carbonates formés sont conditionnés avec au moins une partie des particules solides formant le lit (6).

11. Procédé selon la revendication 10, caractérisé en ce que les carbonates formés et au moins une partie du lit (6) sont vitrifiés

12. Procédé selon l'une quelconque des revendications précédentes, caractérisé en ce que le lit fluidisé (6) contient des particules solides de SiO₂ et éventuellement d'un ou de plusieurs oxydes ou carbonates du groupe formé par les composés suivants: CaO, CaCO₃, B₂O₃, Al₂O₃, MgO, MgCO₃, BaO, ZnO, ZnCO₃, PbO, PbCO₃, Fe₂O_{3'} TiO₂ et ZrO₂.

## Claims

1. Process for the oxidation of at least one alkali metal, according to which this alkali metal is oxidised in a liquid state as a result of a reaction with oxygen, whereby the thus formed oxides are carbonated as a result of a reaction with carbon dioxide, characterised in that the melted alkali metal is dispersed in a fluidised bed (6), whereby the oxygen and the carbon dioxide are added to the fluidised bed (6) in which the oxidation and the carbonisation take place.

2. Process according to claim 1, characterised in that the fluidisation of the bed (6) is obtained thanks to an ascending emission rate of an inert gas.

3. Process according to any of claims 1 and 2, characterised in that the alkali metal is injected by means of an atomiser (12) in the form of droplets inside the fluidised bed (6) itself.

4. Process according to claim 3, characterised in that the alkali metal is pre-atomised inside the atomiser (12).

5. Process according to claim 3 or 4, characterised in that before and possibly at the beginning of the treatment, the atomiser (12) is pre-heated at a temperature between 50 and 200 °C.

6. Process according to any of the preceding claims, characterised in that the oxygen and the carbon dioxide are injected in the form of a dosed mixture.

7. Process according to any of the preceding claims, characterised in that the temperature in the fluidised bed (6) is restricted to between 50 and 700 °C per cooling.

8. Process according to any of the preceding claims, characterised in that the formed carbonates are extracted from the bed (6) at the end of the treatment in view of their conditioning.

9. Process according to claim 8, characterised in that the formed carbonates are extracted from the bed (6) by putting them in a watery solution.

10. Process according to any of claims 1 to 9, characterised in that the formed carbonates are conditioned together with at least a part of the solid particles forming the bed (6).

11. Process according to claim 10, characterised in that the formed carbonates and at least a part of the bed (6) are vitrified.

12. Process according to any of the preceding claims, characterised in that the fluidised bed (6) contains solid SiO₂ particles and possibly one or several oxides or carbonates of the group formed of the following compounds: CaO, CaCO₃, B₂O₃, AL₂O₃, MgO, MgCO₃, BaO, ZnO, ZnCO₃, PbO, PbCO₃, Fe₂O₃, TiO₂ and ZrO₂.

## Patentansprüche

1. Verfahren zur Oxidation von mindestens einem Alkalimetall, gemäß dessen dieses Alkalimetall in geschmolzenem Zustand einer Oxidation durch Reaktion mit Sauerstoff unterzogen wird, wobei die so gebildeten Oxide einer Karbonatation durch Reaktion mit Kohlensäuregas unterworfen werden, dadurch gekennzeichnet, dass das geschmolzene Alkalimetall in einem Fluidatbett (6) dispergiert wird, wobei der Sauerstoff und das Kohlensäuregas zu besagtem Bett (6), worin die Oxidation und Karbonatation stattfinden, hinzugefügt werden.

2. Verfahren gemäß Anspruch 1, dadurch gekennzeichnet, dass die Fluidisierung des Betts (6) mit Hilfe eines aufsteigenden Durchflussstroms eines inerten Gases erzielt wird.

3. Verfahren gemäß einem der Ansprüche 1 und 2, dadurch gekennzeichnet, dass das Alkalimetall mit Hilfe eines Zerstäubers (12) in Form von Tröpfchen mitten in das Fluidatbett (6) eingespritzt wird.

4. Verfahren gemäß Anspruch 3, dadurch gekennzeichnet, dass eine Vorzerstäubung des Alkalimetalls im Inneren des Zerstäubers (12) stattfindet.

5. Verfahren gemäß Anspruch 3 oder 4, dadurch gekennzeichnet, dass vor und eventuell zu Beginn der Behandlung der Zerstäuber (12) auf eine Temperatur von 50 bis 200 °C vorgeheizt wird.

6. Verfahren gemäß einem der vorgenannten Ansprüche, dadurch gekennzeichnet, dass der Sauerstoff und das Kohlensäuregas in Form eines dosierten Gemischs eingespritzt werden.

7. Verfahren gemäß einem der vorgenannten Ansprüche, dadurch gekennzeichnet, dass die Temperatur in dem Fluidatbett (6) durch Kühlung auf 50 bis 700 °C begrenzt wird.

8. Verfahren gemäß einem der vorgenannten Ansprüche, dadurch gekennzeichnet, dass die gebildeten Karbonate am Ende der Behandlung in Hinblick auf ihre Aufbereitung aus dem Bett (6) abgeführt werden.

9. Verfahren gemäß Anspruch 8, dadurch gekennzeichnet, dass die gebildeten Karbonate aus dem Bett (6) entfernt werden, indem sie in eine wässrige Lösung gebracht werden.

10. Verfahren gemäß einem der Ansprüche 1 bis 9, dadurch gekennzeichnet, dass die gebildeten Karbonate mit zumindest einem Teil der festen Partikel, die das Bett (6) bilden, aufbereitet werden.

11. Verfahren gemäß Anspruch 10, dadurch gekennzeichnet, dass die gebildeten Karbonate und zumindest ein Teil des Betts (6) verglast werden.

12. Verfahren gemäß einem der vorgenannten Ansprüche, dadurch gekennzeichnet, dass das Fluidatbett (6) feste Partikel von SiO₂ und möglicherweise von einem oder mehreren Oxiden oder Karbonaten aus der Gruppe der folgenden Verbindungen enthält: CaO, CaCO₃, B₂O_{3,} Al₂O_{3,} MgO, MgCO_{3,} BaO, ZnO, ZnCO_{3,} PbO, PbCO_{3,} Fe₂O_{3,} TiO₂ und ZrO₂.
